# EUROPEAN PATENT APPLICATION

(11) **EP 1 796 357 A1**
(43) Date of publication of application: **13.06.2007**
(21) Application number: 06025314.3
(22) Date of filing: 07.12.2006
(51) Int. Cl.: H04M 1/725

(54) **Method and mobile terminal for transmitting and receiving messages**

(30) Priority: 09.12.2005 KR 20050120696
(71) Applicant: Samsung Electronics Co., Ltd., Yeongtong-gu Suwon-si, Gyeonggi-do (KR)
(72) Inventor: Lee, Sun-Kyoung, Yeongtong-gu, Suwon-si Gyeonggi-do (KR); Lee, Jong-Kerl, Yeongtong-gu, Suwon-si Gyeonggi-do (KR)
(74) Representative: Lang, Johannes

(57) **Abstract**

A method and a terminal for transmitting a message are provided, where whether language information for a receiver has been established is checked (216) when receiver information is input (213), the established language is displayed on a message input window (226) when it is determined as a result of the check that the language information has been established, a message is created (232) using the established language according to key information input from a key input unit and transmitted (234). Although a receiver uses a different language from that used by the transmitter, the mobile terminal can create and transmit a message based on the language used by the receiver by means of language information stored in the mobile terminal, so that the receiver may easily confirm a received message.

## Description

### BACKGROUND OF THE INVENTION

### Field of the Invention

The present invention relates to a method for transmitting and receiving messages and a mobile terminal employing the same. More particularly, the present invention relates to a method and mobile terminal for creating and transmitting/receiving a message between users who speak different languages.

### Description of the Related Art

In general, mobile terminals include a cellular phone, a personal digital assistant (PDA), a personal communication services phone (PCS), an international mobile telecommunication-2000 (IMT-2000) terminal, a GSM (Global System for Mobile Communication) terminal, etc. These terminals can provide a communication function (such as communication or data exchange) while in motion.

Such mobile communication terminals are now widely used by all kinds of people, of all ages and sexes, throughout the world, and are recognized by people as indispensable. As such, these terminals are routinely carried by their users so that designs of the terminals have tended toward compactness, slimness and lightness in consideration of portability. The design of the terminals has also tended towards multimedia availability so as to have a wider variety of functions.

One function of a mobile terminal is to perform phone communications. However, the mobile terminal also provides various supplementary functions. One supplementary function is the transmitting/receiving of a short message, such as a voice message, a multimedia message, and an email. Another supplementary function is that of a memory for storing and searching for phone numbers. Mobile terminals also provide various additional functions and services such as a camera function, a digital broadcasting reception function, a game function, and the like.

Through these various additional functions and services, the mobile terminal provides great convenience to modem persons.

Recently, mobile terminals are being increasingly used for providing a short message service, multimedia message service, and email service. One reason is that these services enable a desired message to be transmitted regardless of whether a counterpart mobile terminal is being concurrently used for communication. Also, these services can be provided at a lower cost than voice communication.

The function of a mobile terminal has additionally been expanded so that Internet access has been made possible. Also, the user is able to photograph a desired image regardless of the time and location using a camera function included in the mobile terminal. Accordingly, there is a further increase in the terminal's use as a multimedia messaging service (MMS) because it enables the user to transmit a photographed or stored image by attaching the image to a short messaging service (SMS).

In addition, through the combination of computer technology and wireless communication technology, email among computer users is also able to be transmitted/received among users of mobile terminals. This function of enhanced communication by email is being increasingly used by public enterprises as well as by individuals.

However, as the use of the SMS, MMS, and email rapidly increases throughout the world, there exists a difficulty in transmitting/receiving a message between users who speak different languages.

One solution of such a problem is a mobile terminal which allows the user to select a desired language and to input characters of the selected language when creating a message. However, in that case, the user must remember languages used by every receiver, which causes an inconvenience to the user.

Also, if the user misjudges the language used by a receiver and creates and transmits a message for an important engagement or business event to the receiver using the wrong language, the receiver may delete the message without reading it by misconceiving it as being a spam message.

Accordingly, there is a need for an improved method of transmitting and receiving messages on a mobile terminal between users who communicate in different languages.

### SUMMARY OF THE INVENTION

Exemplary embodiments of the present invention address at least the above problems and/or disadvantages and provide at least the advantages described below. Accordingly, an aspect of the present invention is to provide a method and mobile terminal for creating a transmission message using a language that is automatically established, based on language information stored in a mobile terminal, when the message is created.

According to an exemplary embodiment of the present invention, there are provided a method and mobile terminal for creating a transmission message using a language selected by the user, instead of using a language automatically established based on language information stored in the mobile terminal.

According to an exemplary embodiment of the present invention, there are provided a method and mobile terminal for creating a transmission message having the same contents as the message which has been created using an automatically established language, using a language requested by the user when there is one or more receiver.

According to an exemplary embodiment of the present invention, there are provided a method and mobile terminal for creating and transmitting a text message after recognizing a voice using a language established in a mobile terminal when the user inputs a voice message.

According to an exemplary embodiment of the present invention, there are provided a method and mobile terminal for analyzing a received message to automatically establish a language of the received message, and creating and transmitting a reply message in the automatically established language when the user requests a reply function.

According to an exemplary embodiment of the present invention, there are provided a method and mobile terminal for storing transmitter information of a received message and language information automatically established through the analysis of the received message in a storage area of a mobile terminal according to a request of the user, when the information has not been stored in the storage area.

According to an exemplary embodiment of the present invention, there are provided a method and mobile terminal for displaying language information of additional receiver information stored in a mobile terminal when there is at least one additional receiver to receive the transmission message, thereby enabling the creation of a transmission message using a language selected by the user.

According to an exemplary embodiment of the present invention, there are provided a method and mobile terminal for creating a transmission message using a language requested by the user when the user requests the change of a preestablished language, in the state in which a language for creating the transmission message is automatically established through the analysis of a received message, and the transmission message is created using the automatically established language according to the reply request of the user.

According to an exemplary embodiment of the present invention, there are provided a method and mobile terminal for analyzing a voice message when a received message including a voice message is selected by the user, and establishing and displaying the message in a relevant language obtained through the analysis.

In accordance with an exemplary aspect of the present invention, there is provided a method and mobile terminal for transmitting a message where, whether language information for a receiver has been established is checked when receiver information is input; the established language is displayed on a message input window when it is determined as a result of the check that the language information has been established; a message using the established language is created according to key information input from a key input unit, and the created message is transmitted.

### BRIEF DESCRIPTION OF THE DRAWINGS

The above and other objects, features and advantages of certain exemplary embodiments of the present invention will be more apparent from the following description taken in conjunction with the accompanying drawings, in which:
FIG. 1 is a block diagram illustrating the construction of a mobile terminal according to an exemplary embodiment of the present invention;
FIG. 2 is a flowchart illustrating the procedure of transmitting a message in a mobile terminal according to an exemplary embodiment of the present invention; and
FIGs. 3A and 3B are flowcharts illustrating a procedure of transmitting a reply message in response to a received message in a mobile terminal according to an exemplary embodiment of the present invention.

Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of the embodiments of the invention and are merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

The term "receiver identification information" used in the exemplary embodiments of the present invention represents information relating to a receiver which is required for the user of a mobile terminal to transmit a message. The "receiver identification information" includes a telephone number, an email address, and so on. The term "receiver information" used in the exemplary embodiments of the present invention represents all information relating to a receiver which is required for the user of a mobile terminal to create, display, and transmit a message. The "receiver information" includes language information and the like in addition to the receiver identification information. The term "language information" used in the exemplary embodiments of the present invention includes the languages usually used by transmitters and receivers and languages exclusively-used by mobile terminals. The term "storage information" used in the exemplary embodiments of the present invention represents information stored in a mobile terminal in order to be used for communication and message transmission. The "storage information" includes a telephone directory, a phone book, a photo phone book, and so on. The term "additional receiver information" used in the exemplary embodiments of the present invention represents information similar to the receiver information. The "additional receiver information" is used to represent that there are at least two receivers.

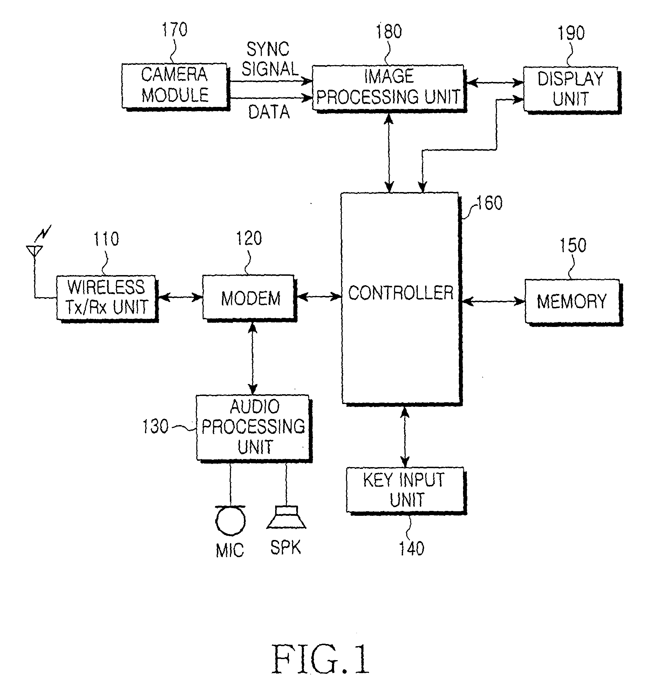

FIG. 1 is a block diagram illustrating the construction of a mobile terminal according to an exemplary embodiment of the present invention.

The mobile terminal 100 includes a wireless transmission/reception unit 110, a modem 120, an audio processing unit 130, a key input unit 140, a memory 150, a camera module 170, an image processing unit 180 and a display unit 190.

The wireless transmission/reception unit 110 functions to transmit/receive voice data, character data, image data, and control data, under the control of the controller 160. To this end, the wireless transmission/reception unit 110 includes an RF transmitter and an RF receiver in which the RF transmitter up-converts and amplifies frequencies of a signal to be transmitted. The RF receiver also low-noise amplifies a received signal and down-converts the frequency of the received signal.

The modem 120 includes a transmitter for encoding and modulating the signal to be transmitted and a receiver for demodulating and decoding the received signal.

The audio processing unit 130 may include a codec, which contains a data codec for processing packet data and the like and an audio codec for processing an audio signal such as a voice.

The audio processing unit 130 modulates an electrical signal input from a microphone, thereby converting the electrical signal into voice data. The audio processing unit 130 demodulates encoded voice data input from the wireless transmission/reception unit 110 to an electrical signal, thereby outputting the demodulated electrical signal to a speaker. In an exemplary implementation, the audio processing unit 130 includes a codec, in order to convert a digital audio signal received through the wireless transmission/reception unit 110 into an analog signal and to reproduce the analog signal, and in order to convert an analog audio signal generated from a microphone into a digital audio signal. The codec contains a data codec for processing packet data and the like and an audio codec for processing an audio signal such as a voice. The codec may be included in the controller 160.

In addition, the audio processing unit 130 outputs an audio signal of a music file reproduced in the mobile terminal 100, through the speaker.

The key input unit 140 has a key matrix structure, includes character keys, number keys, various function keys and an exterior volume key, and outputs a key input signal corresponding to a key selected by the user to the controller 160.

The memory 150 may include program memory and data memory. The memory 150 stores various information required for controlling the operation of the mobile terminal 100, information required for recognizing the language of a voice and converting recognized voice data into text data, and various information selected and/or established by the user. That is, the memory 150 includes a ROM for storing an operating system accessed through the controller 160 for the general operation of the mobile terminal 100, and a RAM for storing data according to control commands in the course of processing data.

The memory 150 may be constructed separately from the controller 160, or may be integrated or included in the controller 160 according to necessity.

The controller 160 controls the entire operation of the mobile terminal 100 according to an embodiment of the present invention. When the controller 160 receives a specific message through the wireless transmission/reception unit 110, the controller 160 determines if the user requests that the received message be displayed. The specific message may include a multimedia message, an email, and a voice mail.

The user may request display of the received message by a confirmation signal input through the key input unit 140 to the controller 160. When the confirmation signal has been input, for example when a confirmation key operates after a message has been received, the controller 160 determines whether the received message is a voice mail or a text message. When a voice mail is received in the form of a voice message, the controller 160 checks language information included in the transmitter information, such as the telephone number or email address included with the received voice mail. Or, the controller 160 analyzes the voice message based on voice analysis information stored in the memory 150, establishes a corresponding language in the receiver information of the memory 150, and displays the corresponding language in the display unit 190.

In addition, the controller 160 converts the voice message into a text message based on the corresponding language, and displays the converted text message through the display unit 190. Even when a text message is received, the controller 160 analyzes the text message and transmitter information, and controls the corresponding information to be stored in the memory 150 and to be displayed through the display unit 190.

The camera module 170, which photographs an image, may include a lens unit capable of performing zoom-in/zoom-out action. The camera module 170 includes a camera sensor and a signal processing section. The camera sensor converts an optical signal obtained through photography into an electrical signal. The signal processing section converts an analog image signal obtained through photography by the camera sensor into digital data.

The camera sensor may be a CCD (Charge Coupled Device) sensor and the signal processing section may include a digital signal processor (DSP). Also, the camera sensor and the signal processing section may be integrally or separately constructed.

The image processing unit 180 performs a function to generate image data for displaying an image signal output from the camera module 170.

The image processing unit 180 processes an image signal, which is output from the camera module 170, in a unit of frame, and outputs the frame image data to be suitable for the screen size and the property of the display unit 190. Also, the image processing unit 180 includes a video codec so as to compress frame image data displayed on the display unit 190 by using a predetermined scheme and to restore compressed frame image data to original frame image data.

In addition, the image processing unit 180 may have an On Screen Display (OSD) function and can output OSD data according to the size of a display screen under the control of the controller 160.

The display unit 190 outputs various display data generated in the mobile terminal and may include a liquid crystal display (LCD). When the LCD is realized, it may use a touch screen scheme so that the display unit 190 may serve as an input section.

In addition, the display unit 190 displays an image signal output from the image processing unit 180 and user data output from the controller 160 on a screen.

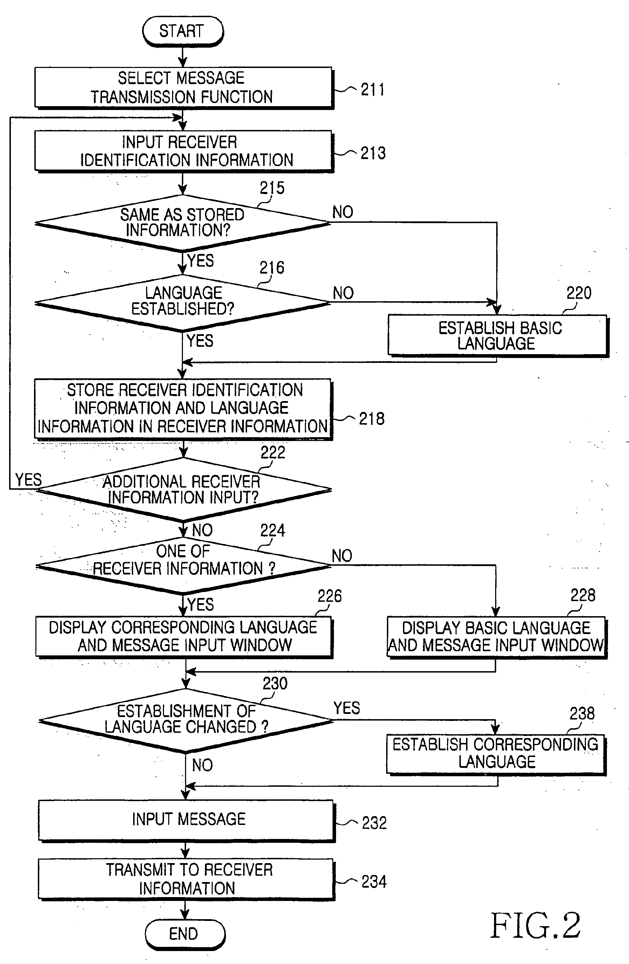

FIG. 2 is a flowchart illustrating the procedure of transmitting a message in a mobile terminal according to an embodiment of the present invention.

That is, FIG.2 shows a procedure for automatically establishing a language according to receiver information input by the user in a mobile terminal, creating a message using the established language, and transmitting the created message.

Referring to FIGs. 1 and 2, first, the controller 160 determines that a message transmission function is selected by the user (step 211). The message to be transmitted includes, for example, a short message, a multimedia message and an email.

The controller 160 receives receiver identification information through the key input unit 140 from the user (step 213). In step 215, the controller 160 checks whether or not the memory 150, such as a telephone directory or phone book, has stored therein the same information as the received receiver identification information. When the memory 150 already has stored therein the same information as the received receiver identification information, the controller 160 checks whether or not language information corresponding to the received receiver identification information is established in the memory 150 so as to be used for creating a message (step 216).

When language information corresponding to the received receiver identification information is established in the memory 150 so as to be used for creating a message, the controller 160 proceeds to step 218 of storing receiver information which includes the receiver identification information and the established language information. The receiver identification information included in the receiver information represents an identification number or address required for transmitting/receiving information among devices (such as mobile terminals and information terminals), and may be a telephone number, an IP address, or an email address.

In contrast, when language information corresponding to the receiver identification information input from the user is not established in the memory 150, the controller 160 sets a default language as a language for creating a message (step 220), and then proceeds to step 218, in which receiver information including the receiver identification information and the default language is stored. The controller 160 may establish a language for creating a message by using key information input from the key input unit 140.

When the same information as the received receiver identification information is stored but corresponding language information for creating a message is not established, the controller 160 sets a default language as a language for creating a message (step 220), and stores the receiver information including the receiver identification information and the basic language (step 218). Also, the controller 160 may establish a language for creating a message by using key information input from the key input unit 140.

In step 222, the controller 160 determines if additional receiver identification information for adding a receiver is input by the user. When it is determined that receiver identification information for adding a receiver is input by the user, the controller 160 returns to step 213 for processing the additional receiver identification information input for adding a receiver.

In contrast, when it is determined there is no additional receiver identification information input by the user for adding a receiver, the controller 160 determines whether one type, or two or more types of stored language information exist (step 224). When it is determined that there is only one type of stored language information, the controller 160 sets the language for creating a message to the language information included in the receiver information and displays a message input window through the display unit 190 (step 226). In contrast, when it is determined that there are two or more types of stored language information, the controller 160 sets the default language as the language for creating a message, and displays a message input window through the display unit 190 (step 228). That is, when there are two or more types of stored language information, in order to prevent an improper language from being transmitted to a message receiver, a default language is set as the language for creating a message and a message input window is displayed through the display unit 190 (step 228).

In step 230, the controller 160 determines if the user, having confirmed language information displayed on the message input window, requests a change of the established language. When it is determined that the user does not request a change of the established language, the controller 160 receives and stores a message input through the key input unit 140 based on the established language (step 232). The controller 160 also transmits the stored message to one or more receivers corresponding to the receiver identification information included in the receiver information according to the transmission request of the user (step 234). The receiver identification information represents an identification number or address required for transmitting/receiving information among devices (such as mobile terminals and information terminals), and may be a telephone number, an IP address, or an email address.

In contrast, when it is determined that the user requests a change of the established language, the controller 160 sets the language requested by the user as the language for creating a message (step 238). Next, the controller 160 displays a message input window, receives and stores a message input through the key input unit 140 using the established language (step 232), and then transmits the stored message to one or more receivers corresponding to the receiver identification information included in the receiver information according to the transmission request of the user (step 234).

In a state in which a message is input and displayed using a language established in the mobile terminal, the controller 160 may also determine if the user requests a change of the established language. When it is determined that the user requests a change of the established language, the controller 160 may change the displayed message to a message in the language requested by the user, and display the changed message.

According to the procedure shown in FIG. 2, when there are at least two types of language information, a message created by the user using a default language is transmitted to relevant receivers. However, if the mobile terminal includes a translation program, a message created using a default language is translated into a corresponding language for each receiver, and each translated message is transmitted to each corresponding receiver. In this case, while a transmitter creates a message using a default language, each receiver can receive the message comprised of a language suitable for that receiver.

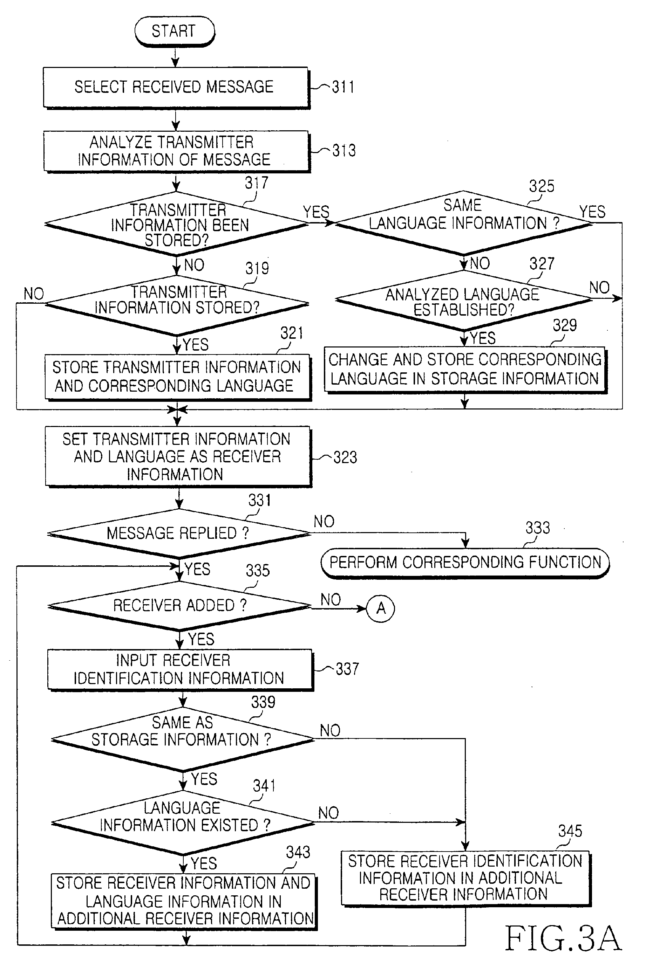

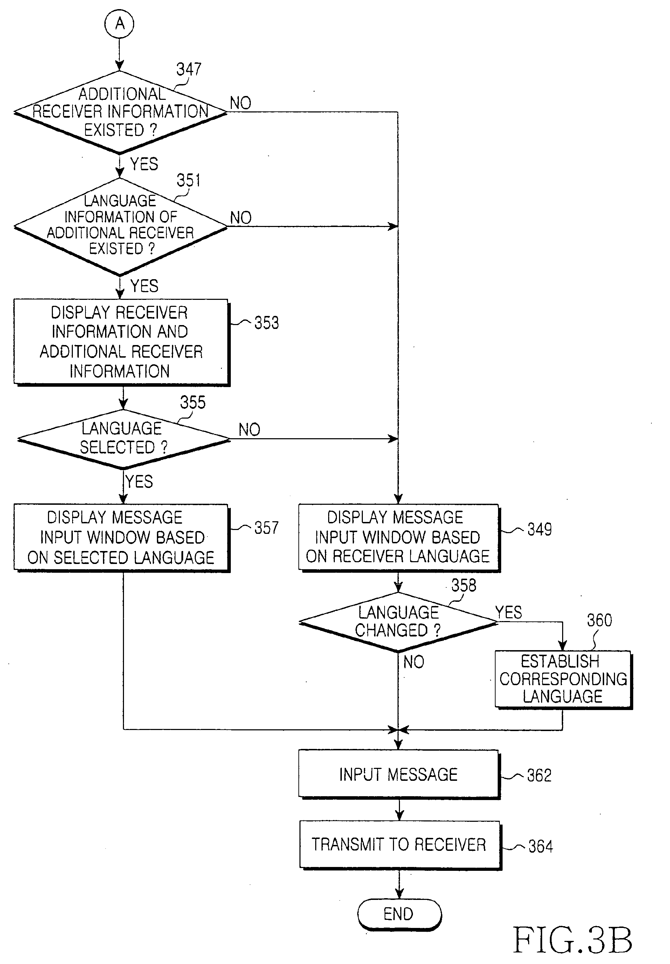

FIGs. 3A and 3B are flowcharts illustrating a procedure for transmitting a reply message in response to a message received by a mobile terminal according to an exemplary embodiment of the present invention. That is, FIGs. 3A and 3B shows a procedure of analyzing transmitter information and contents of a received message in order to automatically establish a language, and creating and transmitting a message using the established language in a mobile terminal.

Referring to FIGs. 1, 3A and 3B, the controller 160 notifies the user of a message reception event through the display unit 190 and/or through the speaker through the audio processing unit 130. Then, when the controller 160 receives input corresponding to selection of the received message, through the key input unit 140, from the user (step 311), the controller 160 analyzes the language used for creating the received message (step 313). In this case, the controller 160 analyzes a voice based on voice analysis information stored in the memory 150 when the received message includes a voice mail, and analyzes characters using character analysis information when the received message is a text message. The received message may be a short message, a multimedia message; or an email.

The controller 160 checks whether or not the transmitter information included in the received message is stored as storage information in the memory 150 (step 317). When the transmitter information is not stored in the memory 150, the controller 160 asks the user through the display unit 190 if the user wants to store the transmitter information as storage information in the memory 150 (step 319). When the user requests the transmitter information to be stored, the controller 160 stores the transmitter information and corresponding language information as the storage information in the memory 150 (step 321), and establishes receiver information (receiver identification information and language information) by using the transmitter information (transmitter identification information and language information) (step 323).

In contrast, when the transmission information is stored in the memory 150, the controller 160 determines if language information stored in the memory 150 is equal to the language information analyzed from the received message (step 325). When it is determined that the language information stored in the memory 150 is equal to the language information analyzed from the received message, the controller 160 establishes receiver information using the transmitter information (step 323). In contrast, when it is determined that the language information stored in the memory 150 is not equal to the language information analyzed from the received message, the controller 160 checks whether or not the user requests the corresponding language to be stored in the memory 150 (step 327). When the user requests the corresponding language to be stored, the controller 160 changes the stored language information (step 329). In contrast, when the user does not request the corresponding language to be stored, the controller 160 establishes receiver information using the transmitter information (step 323).

The controller 160 determines if the user requests that a reply message be created in response to the received message (step 331). When the user does not request that a reply message is created, the controller 160 may perform an alternative function as requested by the user (step 333). When the user requests that a reply message be created, the controller 160 determines if there is a different or additional receiver to be added to the receiver information (step 335).

When a different or additional receiver is requested by the user, the controller 160 receives receiver identification information (step 337) and determines if the received receiver identification information is included in information stored in the memory 150 (step 339). When the received receiver identification information is included in information stored in the memory 150, the controller 160 determines if language information corresponding to the received receiver identification information is stored in the memory 150 (step 341). When language information corresponding to the received receiver identification information is stored in the memory 150, the controller 160 stores receiver information using the additional receiver information (step 343) and determines if there is another additional receiver (step 335).

If it is determined in step 339 that the received receiver identification information is not included in information stored in the memory 150, or when it is determined in step 341 that language information corresponding to the received receiver identification information is not stored in the memory 150, the controller 160 stores only receiver identification information as additional receiver information (step 345).

In contrast, if it is determined in step 335 that there is no additional receiver, the controller 160 determines if additional receiver information exists (step 347). When there is no additional receiver information, the controller 160 displays a message input window through the display unit 190 by using the language information included in the receiver information (step 349). In contrast, when there is additional receiver information, the controller 160 determines if the additional receiver information includes language information (step 351).

When the additional receiver information does not include language information, the controller 160 displays a message input window through the display unit 190 by using the language information included in the receiver information (step 349). In contrast, when the additional receiver information includes language information, the controller 160 displays the receiver information and the additional receiver information (step 353).

In step 355, the controller 160 determines if a language is selected by the user. When no language is selected by the user, the controller 160 displays a message input window through the display unit 190 by using the language information included in the receiver information (step 349). In contrast, when a language is selected by the user, the controller 160 displays a message input window by using the selected language (step 357), thereby entering a message input mode for creating a message (step 362).

After the message input window using the receiver's language is displayed, if a change of the language is requested by the user (step 358), the controller 160 establishes the language requested by the user as the language for creating a message (step 360). In contrast, if a change of the language is not requested by the user, the controller 160 enters a message input mode for creating a message (step 362).

In a state in which a message is input and displayed using a language established in the mobile terminal at the message input mode, the controller 160 may also determine if the user requests change of the established language. When it is determined that the user requests a change of the established language, the controller 160 may change the displayed message to be a message of the language requested by the user, and display the changed message.

After the user completes the input of a message, the controller 160 transmits the created message to receivers corresponding to the receiver information and additional receiver information as applicable (step 364).

According to exemplary embodiments of the present invention as described above, the mobile terminal can automatically establish a language according to language information stored therein and can enable a message using the established language to be created. Also, when the user requests a change of the established language, the mobile terminal enables a transmission message to be created using a language requested by the user. In addition, according to exemplary embodiments of the present invention, the mobile terminal can automatically establish a language by analyzing a received message, and can store transmitter information and language information as storage information according to selection by the user, when the transmitter and language information is not stored in the mobile terminal. Also, according to exemplary embodiments of the present invention, the mobile terminal detects language information by analyzing a voice message, and utilizes the detected language information, thereby providing better convenience to the user when using the mobile terminal.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for transmitting a message in a mobile terminal, the method comprising the steps of:
checking whether language information for a receiver has been established when receiver information is input;
displaying an established language on a message input window when the language information has been established;
selectively creating a message using the established language; and
transmitting the created message.

2. The method as claimed in claim 1, wherein the checking step comprises the steps of:
checking whether information stored in a storage comprises information corresponding to the receiver information; and
checking whether language information has been established in the stored information when the stored information comprises the information corresponding to the receiver information .

3. The method as claimed in claim 1, wherein, in the displaying step, a default language is displayed on the message input window when the language information has not been established.

4. The method as claimed in claim 1, wherein, in the displaying step, default language is displayed on the message input window when different languages have been established for at least two types of the receiver information.

5. The method as claimed in claim 1, wherein, in the displaying step, a selected language is displayed on the message input window when different languages have been established for at least two types of the receiver information.

6. The method as claimed in claim 4, further comprising: the step of translating a message created using a language displayed on the message input window into a language established for at least one piece of receiver information; and transmitting the created message.

7. The method as claimed in claim 1, wherein, in the message creating step, when the information input comprises voice input, the voice input is converted into a text message based on the language displayed on the message input window and the text message is displayed.

8. The method as claimed in claim 1, wherein, in the message creating step, when a change to a different language is requested in a state in which the message has been created and displayed using the established language, the message is converted into another message based on the requested language and the converted message is displayed.

9. The method as claimed in claim 1, wherein the message comprises at least one of a short message, a multimedia message, and an email.

10. A method for transmitting/receiving a message in a mobile terminal, the method comprising the steps of:
checking a language used for creating a received message and establishing the language;
displaying the established language on a message input window when a reply is requested;
creating a transmission message using the established language according to input information; and
transmitting the created transmission message.

11. The method as claimed in claim 10, wherein the establishing of the language comprises the steps of:
checking whether storage information comprises transmitter information of a transmitter of the received message; and
establishing a language from the input information when the transmitter information has not been stored, and checking whether the storage information comprises the language information when the transmitter information has been stored.

12. The method as claimed in claim 10, wherein, in the step of displaying the established language, a selected language is displayed on the message input window when different languages have been established for at least two types of receiver information input from the key input unit.

13. The method as claimed in claim 10, further comprising the steps of:
checking whether the storage information comprises additional receiver information if an additional receiver is added to the reply; and
updating the additional receiver information using language information from the storage information when the storage information comprises the additional receiver information.

14. The method as claimed in claim 10, wherein, when the received message comprises a voice, the voice is converted into a text message based on the language displayed on the message input window and the text message is displayed.

15. The method as claimed in claim 10, wherein, in the transmission message creating step, when a change to a different language is requested in a state in which a message has been created and displayed using the established language, the message is converted into another message based on the requested language and the converted message is displayed.

16. The method as claimed in claim 10, wherein the message comprises at least one of a short message, a multimedia message, and an email.

17. The method as claimed in claim 1, wherein the input information comprises information input from a key input unit.

18. The method as claimed in claim 5, further comprising: the step of translating a message created using a language displayed on the message input window into a language established for at least one piece of receiver information; and transmitting the created message.

19. The method as claimed in claim 10, wherein the input information comprises information input from a key input unit.

20. A mobile terminal comprising:
a receiver;
a transmitter;
a controller;
a display; and
an input unit;
wherein, when a message is transmitted by the transmitter, the controller controls checking whether language information of the receiver has been established when receiver information is input;
an established language is displayed on a message input window of the display when the language information has been established;
a message is selectively created using the established language via the input unit; and
the controller controls the transmitter to transmit the created message.
